# EUROPÄISCHE PATENTANMELDUNG

(11) **EP 3 511 236 A1**
(43) Veröffentlichungstag der Anmeldung: **17.07.2019**
(21) Anmeldenummer: 19151014.8
(22) Anmeldetag: 09.01.2019
(51) Int. Cl.: B62K 21/12, B62K 21/18, B62K 21/26, B62K 21/16, B62J 99/00

(54) **FAHRRADLENKER**

(30) Priorität: 11.01.2018 DE 202018000134 U
(71) Anmelder: Canyon Bicycles GmbH, 56073 Koblenz (DE)
(72) Erfinder: Wagner, Lars, 64367 Mühltal (DE); Kohl, Wolfgang, 91126 Schwabach (DE); Schuchnigg, Lukas, 56068 Koblenz (DE)
(74) Vertreter: dompatent von Kreisler Selting Werner - Partnerschaft von Patent- und Rechtsanwälten mbB

(57) **Zusammenfassung**

Ein Fahrradlenker weist ein Mittelteil (10) auf, das mit einem Lenkervorbau (12) verbindbar oder einstückig ausgebildet ist. Mit dem Mittelteil (10) sind zwei Außenteile (20) insbesondere in ihrer Lage veränderbar verbunden. Hierdurch kann die Breite des Lenkers individuell eingestellt werden.

## Beschreibung

Die Erfindung betrifft einen Fahrradlenker.

Für unterschiedliche Fahrradtypen besteht eine Vielzahl unterschiedlicher Lenkerformen. Diese weisen sodann jeweils noch unterschiedliche Breiten auf, um für den entsprechenden Benutzer geeignet zu sein. Neben anatomischen Gegebenheiten des Benutzers werden von den Benutzern noch individuelle Anforderungen an die Breite des Fahrradlenkers gerichtet. Beispielsweise bei Lenkern für Mountainbikes, deren äußere Bereiche gerade ausgebildet sind ist es möglich, die Breite des Lenkers durch Ablängen der Außenbereiche, d.h. durch Absägen zu verringern. Allerdings ist es nicht möglich, die Breite derartiger Lenker zu variieren oder beispielsweise eine schmalere Lenkerbreite auszuprobieren und ggf. wieder zu verbreitern. Bei anderen Lenkerformen, wie beispielsweise bei Rennradlenkern, entgegen der Fahrrichtung gebogenen Lenkern und dergleichen, ist ein Ablängen zur Veränderung der Lenkerbreite nicht möglich.

Aufgabe der Erfindung ist es, einen Fahrradlenker zu schaffen, mit dem auf einfache Weise die Lenkerbreite variiert werden kann.

Die Lösung der Aufgabe erfolgt erfindungsgemäß durch einen Fahrradlenker mit den Merkmalen des Anspruchs 1.

Der erfindungsgemäße Fahrradlenker weist einen Mittelteil auf. Der Mittelteil ist beispielsweise über eine Klemmverbindung mit dem Lenkervorbau verbindbar. Ebenso ist es möglich, dass das Mittelteil des Lenkers einstückig mit dem Vorbau verbunden ist. Mit dem insbesondere symmetrisch zum Lenkervorbau angeordneten bzw. ausgebildeten Mittelteil sind zwei Außenteile verbunden. Im montierten Zustand sind die Außenteile somit auf der Außenseite des Mittelteils angeordnet. Die Außenteile umfassen jeweils einen Greifbereich. Erfindungsgemäß sind die beiden Außenteile lösbar mit dem Mittelteil verbunden. Hierdurch ist es möglich, die Außenteile beispielsweise in unterschiedlicher Position mit dem Mittelteil zu verbinden, sodass die Lenkerbreite variiert werden kann. Auch ist es möglich, mit dem Mittelteil unterschiedliche Außenteile zu verbinden, sodass hierdurch die Breite des Lenkers, aber auch die Form des Lenkers verändert werden kann.

In besonders bevorzugter Ausführungsform kann die Lage der Außenteile gegenüber dem Mittelteil verändert werden. Beispielsweise ist ein Verbinden zwischen den Außenteilen mit dem Mittelteil in unterschiedlichen Positionen möglich. Eine Verbindung kann hierbei durch Klemmelemente und/oder Rastelemente und/oder andere Fixierungselemente erfolgen.

In besonders bevorzugter Ausführungsform sind die Außenteile gegenüber dem Mittelteil verschiebbar. Insbesondere ist ein stufenloses Verschieben und sodann Fixieren der Außenteile am Mittelteil möglich, sodass eine stufenlose Veränderung der Lenkerbreite realisiert werden kann.

Zum Fixieren der Außenteile am Mittelteil sind vorzugsweise Fixierelemente vorgesehen. Bei den Fixierelementen kann es sich um Rastelemente und/oder Klemmelemente handeln. Insbesondere sind als Klemmelemente Schrauben, wie Madenschrauben, bevorzugt, wobei in bevorzugter Ausführungsform jeweils nur eine Madenschraube zur Fixierung jeweils eines der beiden Außenteile vorgesehen ist. Auf besonders einfache Weise ist es möglich, durch ein einfaches Lösen der Schrauben das Außenteil durch Verschieben in seiner Lage zu ändern und sodann durch Anziehen der Schraube wieder zu fixieren. In dieser bevorzugten Ausführungsform ist somit ein Verändern der Lenkerbreite auf einfache Weise möglich.

Zur Verbindung der Außenteile mit dem Mittelteil ist es besonders bevorzugt, dass das Mittelteil und/oder die Außenteile eine Öffnung aufweisen. Wenn beispielsweise das Mitteilteil an seinen beiden Außenseiten eine Öffnung aufweist, können die beiden Außenteile jeweils in die entsprechende Öffnung eingesteckt werden. Hierbei ist es insbesondere bevorzugt, dass die Innenabmessungen der Öffnung bei allenfalls geringem Spiel den Außenabmessungen des Außenteils entsprechen. Ebenso ist es möglich, dass die Außenteile eine Öffnung aufweisen, sodass die Außenteile über die äußeren Enden des Mittelteils gesteckt werden, wobei die Abmessungen wieder allenfalls ein geringes Spiel aufweisen. Ebenso ist es möglich, dass beispielsweise sowohl das Außenteil als auch das Mittelteil einen insbesondere stiftförmig ausgebildeten Ansatz aufweisen, der jeweils in eine Öffnung des jeweils anderen Teils einsteckbar ist. Das Vorsehen von einer Öffnung in dem Mittelteil und/oder den Außenteilen hat insbesondere den Vorteil, dass die Kraftübertragung zwischen den Außenteilen und dem Mittelteil gut ist. Dies liegt insbesondere darin begründet, dass eine Überdeckung der beiden Teile realisiert werden kann. Auch ist es bei einer derartigen Ausgestaltung vorteilhaft, dass insbesondere eine stufenfreie Anordnung der Teile zueinander möglich ist, sodass eine sehr individuelle Einstellung der Lenkerbreite verwirklicht werden kann.

Bei einer weiteren bevorzugten Ausführungsform des erfindungsgemäßen Fahrradlenkers weist das Mittelteil und/oder die Außenteile zumindest eine Austrittsöffnung auf. Die Austrittsöffnung dient zum Hindurchführen von Kabeln. Somit ist es möglich, beispielsweise Kabel von Schalthebeln in das Lenkerinnere zu führen und sodann durch den Vorbau in das Gabelrohr und sodann ggf. in Rahmenrohre zu führen. Besonders bevorzugt ist es hierbei, dass die Austrittsöffnung als Schlitz ausgebildet ist, der jeweils in den beiden Außenteilen vorgesehen ist und in Richtung des Mittelteils offen ist. Dies hat den Vorteil, dass die Außenteile gegenüber dem Mittelteil auf einfache Weise verschoben werden können. Es ist sogar möglich, das Außenteil vollständig aus dem Mittelteil herauszuziehen, um das Fahrrad beispielsweise auf einfache Weise transportieren zu können. Hierbei ist eine Demontage der Kabel nicht erforderlich. Ebenso ist es selbstverständlich möglich, dass der entsprechende Schlitz in dem Mittelteil vorgesehen ist und sodann nach außen in Richtung des Außenteils offen ist.

Bevorzugt ist es, dass der Schlitz auf einer im montierten Zustand unteren Seite der Außenteile und/oder des Mittelteils vorgesehen ist. Dies hat insbesondere den Vorteil, dass die von den Außenteilen auf das Mittelteil übertragenen Kräfte besser übertragen werden können, da an der im montierten Zustand oberen Seite der Außenteile und des Mittelteils vorzugsweise keine die Kraftübertragung beeinflussenden Öffnungen oder Ausnehmungen vorgesehen sind.

Die Außenteile weisen vorzugsweise einen inneren in Richtung des Mittelteils weisenden Verbindungsbereich auf, der zum Verbinden mit dem Mittelteil dient. In verbundenem Zustand ist zumindest ein Teil des Verbindungsbereichs innerhalb des Mittelteils angeordnet und/oder umgibt das Mittelteil, sodass eine zuverlässige Kraftübertragung gewährleistet ist. Ferner weisen die Außenteile jeweils einen äußeren, d.h. vom Mittelteil wegweisenden Greifbereich auf. Der Greifbereich kann hierbei gerade ausgestaltet sein und zur Aufnahme von Fahrradgriffen dienen. Die Fahrradgriffe werden insbesondere durch Aufstecken auf den Griffbereichen angeordnet.

Die Griffbereiche können insbesondere zur Ausgestaltung eines Rennlenkers auch gekrümmt bzw. gebogen ausgebildet sein.

Nachfolgend wird die Erfindung anhand einer bevorzugten Ausführungsform unter Bezugnahme auf die anliegenden Zeichnungen näher erläutert.

Es zeigen:
- Figur 1: eine schematische Draufsicht eines erfindungsgemäßen Fahrradlenkers in montiertem Zustand,
- Figur 2: eine schematische Unteransicht eines Teils des in Figur 1 dargestellten Fahrradlenkers in demontiertem Zustand und
- Figur 3: eine schematische Schnittansicht entlang der Linie III-III in Figur 2.

Bei dem in den Figuren dargestellten Fahrradlenker handelt es sich um einen Rennradlenker. Erfindungsgemäß sind jedoch auch andere Lenkerformen möglich.

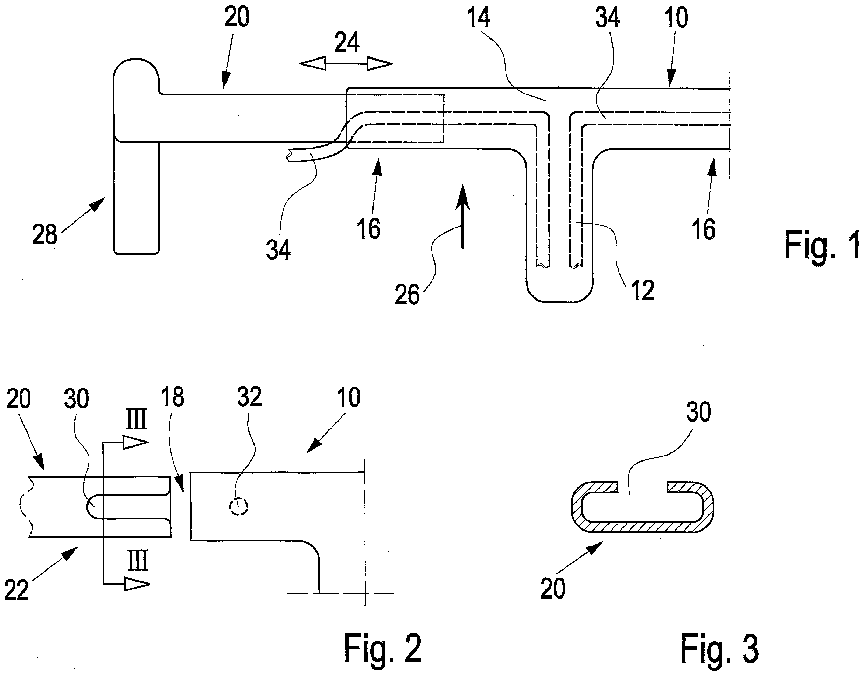

Der erfindungsgemäße Fahrradlenker weist ein Mittelteil 10 auf, der im dargestellten Ausführungsbeispiel einstückig mit einem Lenkervorbau 12 verbunden bzw. einstückig ausgebildet ist. Das Mittelteil 10 weist ein im Wesentlichen senkrecht zum Lenkervorbau verlaufendes insbesondere hohl ausgebildetes Element 14 auf. Im dargestellten Ausführungsbeispiel weist das rohrförmige Element des Mittelteils 10 in Endbereichen 16 jeweils eine Öffnung 18 (Figur 2) auf. In die Öffnung 18 ist auf beiden Seiten jeweils ein Außenteil 20 eingesteckt. Hierbei weist ein Endbereich 22 eines Außenteils 20 eine Außenkontur auf, die im Wesentlichen der Innenkontur des Bereichs 16 des Mittelteils 10 entspricht. Hierdurch ist es möglich, die Außenteile 20 in Richtung eines Pfeils 24, d.h. im montierten Zustand quer zu einer Fahrtrichtung 26 zu verschieben. Hierdurch kann die Breite des Lenkers variiert werden.

Das Außenteil 20, bei dem es sich im dargestellten Ausführungsbeispiel um ein Außenteil mit gekrümmten Griffbereich 28 zur Ausbildung eines Rennradlenkers handelt, kann auch beispielsweise zur Ausbildung eines Mountainbikelenkers eine andere insbesondere gerade Form aufweisen. Bei Ausgestaltung eines Mountainbikelenkers oder dergleichen ist der Griffbereich 28 gerade ausgebildet und dient insbesondere zum Aufstecken eines Fahrradgriffs.

Die Außenteile 20 sind vorzugsweise zumindest im Bereich 22 insbesondere vollständig rohrförmig, d.h. hohl ausgebildet. Die Bereiche 22 der Außenteile die in die Öffnungen 18 des Mittelteils 10 eingesteckt werden, weisen einen sich in Längsrichtung der Außenteile erstreckenden Schlitz 30 auf. Der Schlitz 30 ist in Richtung des Mittelteils 10 offen.

Zur Fixierung wird das Außenteil 20 in die Öffnung 18 in Figur 2 von links eingesteckt. Sobald die gewünschte Breite erreicht ist, erfolgt ein Fixieren des entsprechenden Außenteils 20 in dem Innenteil 10. Dies erfolgt mit Hilfe eines Fixierelements, bei dem es sich im dargestellten Ausführungsbeispiel um eine Madenschraube 32 handelt. Durch die in den Figuren dargestellte Ausführungsform ist ein stufenfreies Verschieben der Außenteile 20 in Richtung des Pfeils 24 möglich. Ferner ist es auf Grund des Vorsehens eines Schlitzes 30 möglich, Kabel 34 in das Innere des Mittelteils 10 einzuführen. Die Kabel 34 werden sodann im dargestellten Ausführungsbeispiel in den ebenfalls hohl ausgebildeten Vorbau 12 eingeführt. Von diesem gelangen sie über das Gabelrohr beispielsweise zu einer Vorderbremse oder werden in Rahmenelemente zu einer Hinterbremse oder einer Schaltung geführt.

Aufgrund des Vorsehens eines in Richtung des Mittelteils 10 offenen Schlitzes ist es auch bei montierten Kabeln 34 möglich, die Außenteile 20 vollständig aus den Mittelteilen 10 herauszuziehen ohne die Kabel lösen zu müssen. Hierdurch ist es beispielsweise zum Transport möglich, die Lenkerbreite durch Herausziehen der beiden Außenteile 20 extrem zu verringern.

## Patentansprüche

1. Fahrradlenker mit
einem Mittelteil (10), das mit einem Lenkervorbau (12) verbindbar ist oder einstückig mit diesem ausgebildet ist und
zwei mit dem Mittelteil (10) lösbar verbundenen Außenteilen (20), die Greifbereiche (28) umfassen.

2. Fahrradlenker nach Anspruch 1, **dadurch gekennzeichnet, dass** die Lage der Außenteile (20) zum Einstellen einer Lenkerbreite gegenüber dem Mittelteil (10) veränderbar ist.

3. Fahrradlenker nach Anspruch 1 oder 2, **dadurch gekennzeichnet, dass** die Außenteile (20) zum Einstellen der Lenkerbreite gegenüber dem Mitteilteil (10) insbesondere stufenfrei verschiebbar sind.

4. Fahrradlenker nach einem der Ansprüche 1 bis 3, **gekennzeichnet durch** ein Fixierelement (32) zum Fixieren der Außenteile (20) an dem Mittelteil (10).

5. Fahrradlenker nach Anspruch 4, **dadurch gekennzeichnet, dass** das Fixierelement als Klemmelement, insbesondere als Schraube und besonders bevorzugt als Madenschraube (32) ausgebildet ist.

6. Fahrradlenker nach einem der Ansprüche 1 bis 5, **dadurch gekennzeichnet, dass** das Mittelteil (10) und/oder die Außenteile (20) eine Öffnung (18) zum Einstecken der Außenteile (20) und/oder des Mittelteils (10) aufweist.

7. Fahrradlenker nach einem der Ansprüche 1 bis 6, **dadurch gekennzeichnet, dass** das Mittelteil (10) und/oder die Außenteile (20) zumindest eine Austrittöffnung (30) zum Hindurchführen von Kabeln (34) aufweist.

8. Fahrradlenker nach Anspruch 7, **dadurch gekennzeichnet, dass** die Austrittsöffnung als Schlitz (30) ausgebildet ist, der in den Außenteilen (20) vorgesehen und in Richtung des Mittelteils (10) offen ist.

9. Fahrradlenker nach einem der Ansprüche 1 bis 8, **dadurch gekennzeichnet, dass** die Außenteile (20) einen inneren in Richtung des Mittelteils (10) vorgesehenen Verbindungsbereich (22) zum Verbinden mit dem Mittelteil (10) und einen außen vorgesehenen Greifbereich (28) aufweisen.

10. Fahrradlenker nach einem der Ansprüche 1 bis 9, **dadurch gekennzeichnet, dass** der Greifbereich (28) zur Ausbildung eines Rennlenkers gekrümmt ist.

11. Fahrradlenker nach einem der Ansprüche 1 bis 10, **dadurch gekennzeichnet, dass** der Greifbereich im Wesentlichen gerade zum Aufstecken des Fahrradgriffs ausgebildet ist.
